# EUROPÄISCHE PATENTANMELDUNG

(11) **EP 4 484 817 A1**
(43) Veröffentlichungstag der Anmeldung: **01.01.2025**
(21) Anmeldenummer: 24182640.3
(22) Anmeldetag: 17.06.2024
(51) Int. Cl.: F16L 55/162, F16L 55/179

(54) **BAUSATZ UND VERFAHREN ZUR ROHRSANIERUNG**

(30) Priorität: 27.06.2023 DE 202023103550 U
(71) Anmelder: Funke Kunststoffe GmbH, 59071 Hamm-Uentrop (DE)
(72) Erfinder: Funke, Matthias, 48324 Sendenhorst (DE); Funke, Christian, 48324 Sendenhorst (DE)
(74) Vertreter: Patentanwälte Olbricht Buchhold Keulertz

(57) **Zusammenfassung**

Ein Bausatz zum Sanieren von Rohren durch Verschließen einer durch einen Rand (3) begrenzten Öffnung (2) in der Wand des Rohrs (1), enthält eine innere Verschlussplatte (4), die größer ist als die Öffnung (2) und die zur Montage durch die Öffnung (2) hindurchführbar ist und anschließend, die Öffnung (2) verdeckend, im Inneren des Rohrs (1) der Rohrwand anlegbar ist, sowie eine Dichtung (17), welche die innere Verschlussplatte (4) gegen das Rohr (1) abdichtet, sowie ein Zugelement (6), welches an die innere Verschlussplatte (4) anschließt, sowie eine innere Traverse (7), welche an das Zugelement (6) in der Art anschließbar ist, dass die innere Traverse (7) gegen abhebende Kräfte gesichert an der inneren Verschlussplatte (4) gehalten ist. Weiterhin schlägt die Erfindung ein Verfahren zum Sanieren von Rohren unter Verwendung eines solchen Bausatzes vor.

## Beschreibung

Die Erfindung betrifft einen Bausatz und ein Verfahren zum Sanieren von Rohren.

Beispielsweise aus dem Bereich mineralischer Kanalrohre, hier insbesondere Betonrohre, ist es aus der Praxis bekannt, dass zum Anschließen von abzweigenden Rohrleitungen - sogenannter Seitenanschlüsse - Öffnungen in die Kanalrohrwände einge-bracht worden sind. Insbesondere wenn derartige Öffnungen vor etlichen Jahrzehnten in die Rohre eingebracht worden sind, wurden die Öffnungen häufig mithilfe eines Meißels erzeugt, so dass Öffnungen mit stark unregelmäßig ausgestalteten Rändern resultierten und die Kavität wesentlich größer war, als es für das Anschlussrohr notwendig gewesen wäre. Nachdem das Anschlussrohr in die Öffnung eingesetzt worden ist, wurden die das Anschlussrohr umgebenden Anteile der Kavität mit einem Mörtel verschlossen. In jüngerer Zeit werden Öffnungen für Seitenanschlüsse mithilfe von Bohrwerkzeugen in die Betonrohre eingebracht, so dass sich ein recht präziser und glatter, konisch nach außen erweiternder Rand der Öffnung ergibt.

Bei der Sanierung von Kanalrohren kann es sich ergeben, dass ein zunächst vorgesehener Seitenanschluss nicht mehr benötigt wird. In diesen Fällen stellt die Unterbrechung der Rohrwand in Form der Öffnung ein Risiko für die angestrebte Dichtheit der Rohrleitung dar. Es ist daher aus der Praxis bekannt, entweder einen Rohrleitungsstutzen an das Rohr anzuschließen, ohne jedoch diesem Stutzen mit einer Rohrleitung zu verbinden. Moderne Rohrleitungsstutzen ermöglichen einen dichten Anschluss an das Rohr, müssen dann allerdings ihrerseits auch wieder dicht verschlossen werden, so dass sie eine lediglich indirekte Verschließung der Öffnung ermöglichen. Weiterhin ist aus der Praxis bekannt, ein mit einer nicht mehr benötigten seitlichen Öffnung versehenes Betonrohr komplett auszutauschen. Ein solcher Austausch ist mit einem erheblichen Arbeitsaufwand verbunden, da das neue Rohr an seinen beiden Enden passgenau und dicht in die vorhandene Rohrleitung eingepasst werden muss, so dass zusätzlich zu den Beschaffungskosten des neuen Rohrs samt erforderlicher Verbindungselemente erhebliche Arbeitskosten entstehen. Die Dauer der Sanierungsarbeiten kann durch den Zeitaufwand für die Beschaffung des Ersatzrohrs nachteilig beeinflusst werden.

Der Erfindung liegt die Aufgabe zugrunde, einen Bausatz und ein Verfahren anzugeben, mit dem ein zuverlässig dichter Verschluss einer Öffnung in einem mineralischen Rohr wirtschaftlich und in kurzer Zeit geschaffen werden kann.

Diese Aufgabe wird durch einen Bausatz nach Anspruch 1 und ein Verfahren nach Anspruch 13 gelöst. Vorteilhafte Ausgestaltungen sind in den Unteransprüchen beschrieben.

Die Erfindung schlägt mit anderen Worten vor, die Öffnung mithilfe einer so genannten "inneren" Verschlussplatte abzudecken, die nämlich an die Innenseite des Rohrs dicht angelegt wird. Die Abdichtung der Öffnung zum Rohrinneren hin schützt stählerne Bewehrungselemente, die am umlaufenden Rand der Öffnung freiliegen, vor einem Angriff der im Inneren des Rohrs geführten, möglicherweise besonders aggressiven Medien, die eine schnelle Korrosion der Bewehrungselemente unterstützen und so das Rohr schwächen können.

Ausgehend von diesem Vorschlag besteht eine erste Weiterentwicklung und eine erste Möglichkeit zur Verbesserung der Dichtungswirkung darin, die Öffnung beidseitig mithilfe der inneren und einer äußeren Verschlussplatte abzudecken. Die Bewehrungselemente werden so auch vor Einwirkungen von im Boden befindlichem Wasser geschützt. Der Bausatz enthält in diesem Fall sowohl eine innere und eine äußere Verschlussplatte sowie die Elemente, um die beiden Verschlussplatten an dem Rohr festzulegen. In einer Ausgestaltung kann bereits lediglich durch diese beiden Abdeckungen die Öffnung geschlossen werden, wenn nämlich wenigstens eine, und dabei vorteilhaft die innere Verschlussplatte, vorzugsweise jedoch die beiden Verschlussplatten der Rohrwand jeweils dicht anliegen. Als dicht wird im Rahmen des vorliegenden Vorschlags in diesem Zusammenhang ein Verschluss der Öffnung bezeichnet, der den Austritt des im Rohr geführten Mediums verhindert. Beispielsweise muss die Öffnung nicht notwendigerweise gasdicht verschlossen werden, wenn lediglich der Austritt einer Flüssigkeit aus dem Rohr verhindert werden soll. Im Vergleich dazu, die Öffnung lediglich mit einer äußeren Verschlussplatte abzudichten, wird eine Vertiefung in der Rohrwand vermieden, die ansonsten nämlich durch die Öffnung geschaffen wäre und in welcher sich Gegenstände verfangen könnten, die anschließend die freie Durchströmbarkeit des Rohrs beeinträchtigen könnten. Weiterhin wird die innere Verschlussplatte mittels der äußeren Verschlussplatte vor Einwirkungen von außen geschützt, beispielsweise vor einem Druck durch Steine, Wurzeln oder dergleichen, der ansonsten von außen auf die innere Verschlussplatte einwirken könnte.

Eine zweite Weiterentwicklung und eine zweite Möglichkeit zur Verbesserung der Dichtungswirkung besteht darin, dass die Öffnung nicht nur durch die innere Verschlussplatte geschlossen wird, sondern die Dichtungswirkung wird insbesondere dadurch verbessert, dass die Kavität, welche die Öffnung in der Rohrwand schafft, ausgefüllt wird, beispielsweise durch eine abdichtende und selbstklebende Vergussmasse, wobei z.B. ein fließfähiger oder pastöser Vergussmörtel verwendet werden kann. Die Bezeichnung als Vergussmasse ist nicht auf dünnflüssige Materialien beschränkt, sondern schließt auch zähfließende Materialien ein, so dass die Vergussmasse beispielsweise in Form mehrerer formbarer Batzen in die Öffnung eingebracht werden kann und nicht aus der Öffnung herausfließt, bis sie ausgehärtet ist. Durch die Vergussmasse werden die am umlaufenden Rand der Öffnung freiliegenden Bewehrungselemente besonders gut vor Korrosion geschützt. Im Zusammenhang mit der Verwendung einer Vergussmasse muss die Dichtung, welche die innere Verschlussplatte gegen das Rohr abdichtet, lediglich eine solche Dichtungswirkung aufweisen, dass sie den Austritt der Vergussmasse aus der Kavität verhindert, so dass je nach Viskosität der z.B. fließfähigen oder pastösen Vergussmasse unterschiedliche Anforderungen an die Dichtungswirkung dieser Dichtung gestellt werden, welche die innere Verschlussplatte gegen das Rohr abdichtet.

Der Bausatz enthält, wenn eine Vergussmasse verwendet werden soll, sowohl die innere Verschlussplatte als auch Material, um die Kavität in dem Rohr auszufüllen. Das Material kann gebrauchsfertig bereitgestellt werden oder es können im Bausatz die Stoffe bereitgestellt werden, die das Anmischen einer Vergussmasse ermöglichen, beispielsweise zwei Komponenten - wie z. B. Harz und Härter - einer aushärtenden Vergussmasse, oder eine Mörtelmischung, die lediglich noch mit an der Baustelle bereitgestelltem Wasser ergänzt werden muss. Durch die Vergussmasse wird einerseits die Dichtheit des Verschlusses der Öffnung besonders zuverlässig sichergestellt, und zweitens wird eine besonders belastbare und druckfeste Sanierung der Rohrwand erzielt, insbesondere da sich die Ränder der Öffnung typischerweise radial nach außen erweitern und insofern der durch die Vergussmasse geschaffene Verschlussstopfen durch von außen einwirkende Kräfte, zum Beispiel durch das Erdreich, in seinen Sitz gepresst wird und die Abdichtungswirkung dadurch verstärkt wird.

In einer Ausgestaltung werden beide Maßnahmen zur Verbesserung der Dichtungswirkung kombiniert, indem die innere und die äußere Verschlussplatte dem Rohr angelegt werden und die dazwischen befindliche Kavität mittels der Vergussmasse ausgefüllt wird. In diesem Fall ist die Vergussmasse vorzugsweise dünnflüssig, so dass sie sich möglichst vollständig an die Unregelmäßigkeiten am umlaufenden Rand der Öffnung anpassen und die Kavität möglichst vollständig ausfüllen kann. Die am umlaufenden Rand der Öffnung freiliegenden Bewehrungselemente werden durch die Vergussmasse optimal abgedichtet und vor Korrosion geschützt. Die Viskosität der Vergussmasse nimmt durch einen Aushärtungs- oder Abbindungsvorgang zu, nachdem sie in die Kavität eingebracht worden ist, so dass die später zähflüssige, zähelastische oder sogar feste Vergussmasse weder durch Gas- oder Luftblasen noch durch Feuchtigkeit verdrängt werden kann und ihre gewünschte Abdichtungswirkung sichergestellt ist.

Die innere Verschlussplatte wird durch die Öffnung in das Rohrinnere geführt. Dort soll sie anschließend die Öffnung vollständig abdecken und der Innenseite der Rohrwand anliegen. Aus diesem Grund ist die innere Verschlussplatte verformbar ausgestaltet. Beispielsweise kann die innere Verschlussplatte aus einem Kunststoff bestehen, der wie eine Folie gefaltet werden kann und einen Hohlraum aufweist, so dass die innere Verschlussplatte zunächst zusammengefaltet sein kann und anschließend expandiert werden kann, indem sie mit Luft aufgeblasen oder mit einem anderen Fluid gefüllt wird.

In einer Ausgestaltung besteht die innere Verschlussplatte aus einer Blechplatte, insbesondere aus einem Stahlblech, und hier insbesondere bevorzugt aus einem Federstahlblech. Die elastische Verformbarkeit des Federstahlblechs ermöglicht es, dieses in einer gebogenen oder sogar aufgerollten Form durch die Öffnung in das Rohrinnere zu bringen, und aufgrund seiner Federelastizität weist das Federstahlblech Rückstellkräfte auf, so dass es anschließend auf einfache Weise wieder zurückgebogen bzw. abgerollt werden kann, um dann großflächig der Innenseite der Rohrwand angelegt zu werden. Die Ausgestaltung der inneren Verschlussplatte aus einem Federstahlblech ermöglicht eine besonders geringe Wandstärke der inneren Verschlussplatte, so dass die innere Verschlussplatte mit einem möglichst geringen Maß in den freien, durchströmbaren Querschnitt des Rohrs hineinragt. Zudem bewirken Rückstellkräfte, die der inneren Verschlussplatte innewohnen und die innere Verschlussplatte gegen die Innenseite des Rohrs drücken - wie im Fall des Federstahlblechs - eine besonders dichte Anlage der inneren Verschlussplatte an der Rohrwand.

Die beiden Verschlussplatten können bei dieser zweiten Ausgestaltung der Erfindung, wenn die Abdichtung der Öffnung durch die Vergussmasse erfolgt, am Rohr verbleiben, insbesondere wenn Sie mit einer selbstklebenden Vergussmasse verklebt sind. Um im Inneren des Rohrs Unebenheiten möglichst zu vermeiden, an denen sich Treibgut festsetzen könnte, kann in einer Ausgestaltung die innere Verschlussplatte entfernt werden, nachdem die zunächst verformbare, fließfähige Vergussmasse erstarrt ist. Aufgrund der möglicherweise eingeschränkten Zugänglichkeit zur Sanierungsstelle kann die Entfernung der inneren Verschlussplatte vorzugsweise automatisch erfolgen, beispielsweise dadurch, dass die innere Verschlussplatte aus einem Material besteht, welches für die Dauer der Sanierung eine ausreichende Stabilität aufweist, anschließend jedoch an Stabilität verliert und sich auf diese Weise automatisch von der Rohrwand löst. Beispielsweise kann die innere Verschlussplatte aus einem verrottbaren Material bestehen, beispielsweise aus einem Biopolymer-Werkstoff oder aus einem natürlichen, abbaubaren Material wie z.B. einem Holzwerkstoff, beispielsweise in Form einer elastisch verformbaren, aus mehreren Furnierlagen gebildeten Holzwerkstoffplatte.

Nachdem die innere Verschlussplatte dem Rohr anliegt und die Öffnung auf der Innenseite des Rohrs verschließt, wird die innere Verschlussplatte gegenüber dem Rohr abgedichtet. Dies kann beispielsweise dadurch erfolgen, dass sie bereits vorab mit der Dichtung versehen ist, nämlich bevor die innere Verschlussplatte durch die Öffnung in das Rohr eingebracht wird. Beispielsweise kann die innere Verschlussplatte auf der Seite, die zur Anlage an der Rohrwand bestimmt ist, entlang ihrem äußeren Umfang mit der Dichtung versehen sein. Eine solche Dichtung kann bereits werkseitig vom Hersteller der inneren Verschlussplatte an der inneren Verschlussplatte angebracht werden, oder sie kann bauseits angebracht werden, beispielsweise unmittelbar bevor die innere Verschlussplatte in das Rohr eingebracht wird. In einer anderen Ausgestaltung des Sanierungsverfahrens wird jedoch die Dichtung erst dann montiert, wenn die innere Verschlussplatte bereits von innen an der Rohrwand anliegt. In diesem Fall wird die Dichtung von außen in die Öffnung eingebracht, nämlich dort, wo der Rand der Öffnung an die innere Verschlussplatte grenzt. Auf diese Weise bildet die Dichtung keine zusätzliche Schicht zwischen der inneren Oberfläche des Rohrs und der inneren Verschlussplatte, so dass das Maß eines in das Rohr ragenden Hindernisses, an dem sich Treibgut festsetzen könnte, möglichst gering gehalten werden kann.

Ein Zugelement ist an der inneren Verschlussplatte angeordnet und erlaubt die Übertragung von Zugkräften nach außen, so dass die innere Verschlussplatte mittels des Zugelements gegen die innere Oberfläche des Rohrs gepresst werden kann. Das Zugelement verläuft also von der inneren Verschlussplatte aus in Richtung nach außen, es kann dabei allerdings so kurz bemessen sein, dass es innerhalb der Öffnung verbleibt und nicht über die Kavität der Öffnung und über die Außenfläche der Rohrwand radial nach außen hinausragt. In einer Ausgestaltung ist das Zugelement als Rohrschelle mit veränderlichen Durchmesser ausgestaltet, wie noch erläutert wird.

Eine innere Traverse erstreckt sich quer durch die Öffnung. Diese innere Traverse wird an das Zugelement angeschlossen, beispielsweise durch die erwähnte Rohrschelle geführt. Da der Rand der Öffnung schräg verläuft und sich zum Rohrinneren hin verjüngt, kann die innere Traverse innerhalb der Öffnung an die Rohrwand angelegt werden. Insbesondere wenn das Zugelement verstellbar ist, wie z.B. die oben erwähnte Rohrschelle, kann die wirksame Länge des Zugelements nun verkürzt und so eingestellt werden, dass die innere Traverse sich am Rand der Öffnung abstützt und gegen abhebende Kräfte gesichert ist, wobei gleichzeitig die innere Traverse und das Zugelement die innere Verschlussplatte an die Innenfläche der Rohrwand heranziehen.

Die innere Traverse kann in einer vorbestimmten Länge bereitgestellt werden, die auf einen bestimmten Öffnungsdurchmesser abgestimmt ist. Insbesondere wenn die Öffnung durch einen Bohrer geschaffen worden ist und einen präzise definierten Rand aufweist, kann die Länge der inneren Traverse präzise auf die Größe der Öffnung abgestimmt sein, so dass die innere Traverse ohne die Erfordernis von Nachbearbeitungen montiert werden kann. Wenn jedoch die Öffnung einen unregelmäßig geformten Rand aufweist, kann die innere Traverse zunächst mit einer übergroßen Länge bereitgestellt und an der Baustelle passend gekürzt werden. In diesem Fall wird die innere Traverse als "kürzbar" bezeichnet, womit ausgedrückt wird, dass mit an der Baustelle bereitstehenden Mitteln wie einem Bolzenschneider, einer Handsäge oder dergleichen, die Traverse auf die passende Länge gekürzt werden kann. Dies betrifft beispielsweise die Querschnittsgeometrie, die Wandstärke und das verwendete Material der inneren Traverse.

Nachdem die innere Traverse montiert ist, kann beispielsweise die oben erwähnte Dichtung von außen in die Öffnung eingebracht werden und entlang der ringförmigen Kontaktzone angebracht werden, wo die innere Verschlussplatte und das Material der Rohrwand am Rand der Öffnung aneinandergrenzen. Als eine solche Dichtung kann beispielsweise eine Dichtungsschnur oder ein Dichtungsband verwendet werden, beispielsweise ein Butylband, das eine besonders einfache Handhabung ermöglicht. Es kann aber auch eine Epoxydmasse, eine Knetmasse oder ein ähnliches Material als Dichtung genutzt werden, nämlich ein selbstklebendes und hinsichtlich seiner Form und Materialstärke anpassungsfähiges Material.

Nach außen wird die Öffnung durch eine äußere Verschlussplatte abgedeckt, die ähnlich wie die innere Verschlussplatte ebenfalls größer ist als die Öffnung und um die Öffnung herum außen an die Rohrwand angelegt werden kann.

Die äußere Verschlussplatte kann außen an das Rohr geklebt werden oder mit Hilfe von Spanngurten, die um das Rohr verlaufen, von außen an das Rohr gepresst werden. In einer Ausgestaltung weist die äußere Verschlussplatte eine Durchgangsöffnung auf, so dass Spannmittel durch diese Durchgangsöffnung hindurchgeführt werden können. Die Spannmittel dienen dazu, die äußere Verschlussplatte an die Rohraußenseite zu pressen. Hierzu stützen sich die Spannmittel an der inneren Traverse ab. Beispielsweise können die Spannmittel als Seil ausgestaltet sein, welches um die innere Traverse geführt ist und sich durch die Durchgangsöffnung der äußeren Verschlussplatte nach au-βen erstreckt. Mittels eines Schiebers, der auf dem Seil verschiebbar ist, der äußeren Verschlussplatte von außen angelegt werden kann und an beliebigen Stellen an dem Seil festgeklemmt werden kann, kann die äußere Verschlussplatte in der gewünschten Stellung festgelegt werden.

In einer anderen Ausgestaltung können die Spannmittel beispielsweise eine Gewindestange enthalten, die in eine Gewindebohrung der inneren Traverse eingeschraubt wird und sich durch die Durchgangsöffnung der äußeren Verschlussplatte erstreckt. Alternativ kann - ebenfalls bei Verwendung einer Gewindestange als Spannmittel - die Bohrung in der inneren Traverse nicht als Gewinde-, sondern als einfache, glattwandige Durchgangsbohrung ausgeführt werden. Falls sich die innere Traverse verziehen sollte, könnte anschließend eine Gewindestange nicht mehr oder nur unter Schwierigkeiten in die Gewindebohrung eingesetzt werden. Die alternativ vorgesehene Durchgangsbohrung wird so groß bemessen, dass die Gewindestange hindurchgeführt werden kann. Um anschließend die gewünschten Spannkräfte zu ermöglichen, wird die Gewindestange von hinten gekontert.

Mittels einer auf der Gewindestange laufenden Mutter, die von außen gegen die äußere Verschlussplatte geführt wird, kann die äußere Verschlussplatte in der gewünschten Stellung festgelegt werden. Der an dem Seil bewegliche Schieber und die auf der Gewindestange laufende Mutter bilden jeweils einen verstellbaren Anschlag, der den Verstellweg der äußeren Verschlussplatte nach außen begrenzt und dementsprechend dazu dienen kann, die äußere Verschlussplatte von außen an das Rohr zu pressen.

Abgesehen von der erwähnten Durchgangsöffnung kann die äußere Verschlussplatte eine zweite Öffnung aufweisen, die als Injektionsöffnung bezeichnet werden kann, falls nämlich vorgesehen ist, eine fließfähige Vergussmasse zwischen die beiden inneren und äußeren Verschlussplatten einzubringen, um mittels der Vergussmasse die Öffnung auszufüllen und dicht zu verschließen. In einer Ausgestaltung, in der die äußere Verschlussplatte die erwähnte Durchgangsöffnung nicht aufweist, sondern z. B. mit Hilfe von Klebstoff oder Spanngurten an der Außenseite des Rohrs gehalten wird, kann diese Injektionsöffnung die einzige Öffnung der äußeren Verschlussplatte sein. Unabhängig davon, ob die äußere Verschlussplatte eine Durchgangsöffnung aufweist oder nicht, kann ergänzend zu einer Injektionsöffnung eine weitere, also eine zweite oder dritte Öffnung in der äußeren Verschlussplatte angeordnet sein, die als Entlüftungsöffnung dient und beim Einfüllen einer Vergussmasse die Bildung einer Luftblase verhindert und eine möglichst vollständige Füllung der Kavität mit der Vergussmasse ermöglicht.

Die äußere Verschlussplatte sowie außen über die Wand des Rohrs hinausragenden Elemente des Bausatzes können entfernt werden und ggf., falls nämlich Elemente des Bausatzes in der erwähnten Vergussmasse festgelegt sein sollten, können nach außen über das Rohr hinausragende Überstände dieser Elemente abgetrennt werden.

Schließlich enthält der Bausatz einen Anpressbogen. Dieser weist zwei Anpressarme auf und ist so lang, dass er die Öffnung übergreift und mit seinen beiden Anpressarmen auf die äußere Verschlussplatte dort aufgesetzt werden kann, wo die äußere Verschlussplatte der Rohrwand anliegt. Der Anpressbogen kann kurvig gebogen verlaufen, oder zwei oder drei winkelig zueinander verlaufende Abschnitte aufweisen, indem er V- oder U-förmig verläuft. Wie die äußere Verschlussplatte schließt auch der Anpressbogen an die Spannmittel an, beispielsweise indem auch der Anpressbogen mit einer Durchgangsöffnung versehen ist, durch die hindurch sich ein Seil oder eine Gewindestange der Spannmittel erstrecken kann. Der Verstellweg des Anpressbogens nach außen kann mittels eines zweiten verstellbaren Anschlags ebenfalls an den Spannmitteln begrenzt werden, beispielsweise ebenfalls durch einen verstellbaren und Festklemmen baren Schieber auf einem Seil oder durch eine Mutter auf einer Gewindestange. Mittels des Anpressbogens kann die äu-ßere Verschlussplatte möglichst dicht an die Außenseite des Rohrs gepresst werden, entweder um für sich genommen die Öffnung nach außen hin dicht zu verschließen, oder um die Abdichtung zu bewirken, falls die Öffnung mit einer Vergussmasse ausgefüllt und verschlossen werden soll.

Die Ausgestaltung der beiden Anpressarme, insbesondere deren Breite an den Enden, die zur Anlage an der äußeren Verschlussplatte bestimmt sind, kann auf unterschiedliche Weise verwirklicht sein. Beispielsweise kann der Anpressbogen aus einem Flachstahl-Streifen bestehen, und die beiden Enden des Anpressbogens werden durch die Enden dieses Flachstahl-Streifens gebildet, mit denselben Querschnittsmaßen, die der Flachstahl-Streifen aufweist. Dies ermöglicht eine praktisch universelle Anwendung des Anpressbogens bei Rohren unterschiedlicher Durchmesser, wobei lediglich der Durchmesser der zu verschließenden Öffnung maßgeblich dafür ist, ob der Anpressbogen verwendet werden kann oder nicht. Wenn jedoch die beiden Enden der Anpressarme länger ausgestaltet sind, so dass sie großflächiger der äußeren Verschlussplatte anliegen, können diese beiden Enden gebogen verlaufen und eine Krümmung aufweisen, die an den Durchmesser des Rohrs angepasst ist, um eine möglichst großflächige und gleichmäßige Anlage an der äußeren Verschlussplatte sicherzustellen.

In ersten praktischen Versuchen hat sich herausgestellt, dass eine ausreichend dichte Anlage der äußeren Verschlussplatte an dem Rohr erreicht werden kann, wenn die äußere Verschlussplatte entlang dem Umfang der zu verschließenden Öffnung an vier Stellen an die Rohrwand gepresst wird. Daher kann ein zweiter Anpressbogen Verwendung finden, der rechtwinklig zu dem ersten Anpressbogen ausgerichtet wird und ebenfalls an die Spannmittel anschließt und mithilfe eines verstellbaren Anschlags an die äußere Verschlussplatte gepresst werden kann. Dieser zweite Anpressbogen kann deutlich flacher oder deutlich tiefer verlaufen als der erste Anpressbogen, so dass die beiden Anpressbögen an unterschiedlichen Stellen an die Spannmittel anschließen können, ohne zu kollidieren und sich gegenseitig zu behindern. In einer besonders einfachen und preisgünstigen Ausgestaltung kann anstelle des zweiten Anschlussbogens eine flache Traverse verwendet werden, die als zweite, äußere Traverse von außen an die äußere Verschlussplatte angelegt wird und bei der im Unterschied zu einem Anpressbogen der mittlere Bereich und die beiden Enden nicht in unterschiedlicher Höhe, sondern in gleicher Höhe angeordnet sind.

Ein Anpressbogen kann die Biegung der Rohrwand überspannen und mit den Enden seiner beiden Anpressarme der äußeren Verschlussplatte anliegen. Der Anpressbogen kann daher vorteilhaft quer zur Längsachse des Rohrs ausgerichtet werden, während die erwähnte zweite, äußere Traverse aufgrund ihres flachen Verlaufs vorteilhaft in Längsrichtung des Rohrs ausgerichtet wird. Die Länge der zweiten, äußeren Traverse ist größer bemessen als der Durchmesser, den die Öffnung in Längsrichtung des Rohrs aufweist, und der sich bei einer von Hand gemeißelten Öffnung von dem Durchmesser unterscheiden kann, den die Öffnung in Umfangsrichtung des Rohrs aufweist.

Mithilfe des erfindungsgemäßen Bausatzes kann ein Verfahren zur Sanierung eines Rohrs durchgeführt werden, bei welchem ein Rohr mit einer mineralischen, insbesondere aus Beton bestehenden Rohrwand saniert wird, wobei das Rohr eine die Rohrwand durchsetzende Öffnung aufweist und das Verfahren die folgenden Verfahrensschritte aufweist:
a) die Öffnung wird durch Verschlussplatten abgedeckt, wobei eine innere Verschlussplatte an die Innenseite der Rohrwand angelegt wird und eine äußere Verschlussplatte außen an die Rohrwand angelegt wird,
b) die beiden Verschlussplatten werden gegen das Rohr abgedichtet.

Diese beiden Verfahrensschritte können nacheinander oder gleichzeitig durchgeführt werden. Beispielsweise können die Verschlussplatten bereits mit einer Dichtung versehen sein, wenn sie an dem Rohr montiert werden, so dass in diesem Fall das Anlegen einer Verschlussplatte an die Innenseite bzw. an die Außenseite der Rohrwand gleichzeitig auch die Abdichtung der Verschlussplatte gegen das Rohr bewirkt.

In einer weiteren Ausgestaltung dieses Verfahrens kann vorgesehen sein, dass die Kavität, welche durch die Öffnung in der Rohrwand geschaffen ist, mit einem Vergussmaterial ausgefüllt wird.

Zu diesem Zweck kann bei Verwendung zweier Verschlussplatten die äußere Verschlussplatte mit einer Injektionsöffnung versehen sein, so dass nach Montage der beiden Verschlussplatten eine fließfähige Vergussmasse in die Kavität eingefüllt werden kann, welche durch die beiden Verschlussplatten und durch den umlaufenden Rand der Öffnung, nämlich durch die Rohrwand, begrenzt ist. Dabei kann eine niedrigviskose Vergussmasse verwendet werden, welche sich an die gegebenenfalls unregelmäßige Umrandung der Öffnung optimal anpassen und diese möglichst vollflächig benetzen kann, zugunsten einer optimalen Abdichtung. Bei Verwendung nur einer, nämlich der inneren Verschlussplatte, kann eine Vergussmasse verwendet werden, die im Vergleich dazu eine höhere Viskosität aufweist, so dass sie nicht außen aus der Kavität herausfließt, beispielsweise kann eine erdfeuchte Mörtelmasse angemischt und in die Öffnung gedrückt werden, die aufgrund ihrer Verformbarkeit im Rahmen des vorliegenden Vorschlags ebenfalls als Vergussmasse bezeichnet wird.

Unter Verwendung des vorschlagsgemäßen Bausatzes kann das Sanierungsverfahren insbesondere mit den folgenden Verfahrensschritten durchgeführt werden:
- die innere Verschlussplatte wird in einem ersten verformten Zustand durch die Öffnung hindurch von außen in das Innere des Rohrs geführt,
- anschließend wird die innere Verschlussplatte in der Art verformt und einen zweiten Zustand sowie in ihre Gebrauchsstellung gebracht, dass sie die Öffnung verdeckt und im Inneren des Rohrs der Rohrwand anliegt,
- die Dichtung wird so an der inneren Verschlussplatte angebracht, dass diese gegen das Rohr abgedichtet ist,
- an das Zugelement, welches die Übertragung von Zugkräften ermöglichend außen an die innere Verschlussplatte angeschlossen ist und in die Öffnung weist, wird die innere Traverse in der Art angeschlossen, dass sie gegen abhebende Kräfte gesichert an der inneren Verschlussplatte gehalten ist,
- die innere Traverse wird erforderlichenfalls gekürzt,
- die innere Traverse wird mit ihren beiden Enden innerhalb der Öffnung an den Rand der Öffnung angelegt,
- die äußere Verschlussplatte wird die Öffnung verdeckend au-ßen an die Rohrwand angelegt,
- die innere Verschlussplatte und die äußere Verschlussplatte werden gegen die Rohrwand gespannt, so dass sie der Rohrwand unter Druck anliegen.

Auch bei dieser Beschreibung des Sanierungsverfahrens gilt, dass die Verfahrensschritte nicht notwendigerweise in der genannten Reihenfolge und nicht notwendigerweise sämtlich an der Baustelle durchgeführt werden müssen. Beispielsweise kann die innere Verschlussplatte bereits in einem kleinen, verformten Zustand angeliefert werden, z.B. zusammengefaltet, aufgerollt oder dergleichen, so dass in einem solchen Fall der entsprechende erste Verformungs-Verfahrensschritt in einem Herstellerwerk der inneren Verschlussplatte durchgeführt wird. Weiterhin kann beispielsweise die Dichtung bereits werkseitig an der inneren Verschlussplatte angeordnet werden, beispielsweise außen am Rand und somit unabhängig von der jeweiligen individuellen Form, in welcher der Rand der Öffnung verläuft. Und beispielsweise kann abweichend von der obigen Aufzählung der Verfahrensschritte die innere Verschlussplatte zunächst mit den Spannmitteln festgelegt werden, bevor die Dichtung angebracht wird.

Wenn der Bausatz auch den Anpressbogen enthält, wird dieser mittels des zweiten verstellbaren Anschlags ebenfalls gegen die Rohrwand gespannt, und zwar in der Art, dass seine beiden Anpressarme die äußere Verschlussplatte außen an die Rohrwand pressen.

In einer Ausgestaltung enthält der Bausatz nicht nur eines, sondern zwei Zugelemente, die im Abstand voneinander an die innere Verschlussplatte anschließen, und zwar in der Art dass die innere Traverse an zwei voneinander beabstandeten Stellen zugfest mit der inneren Verschlussplatte verbunden werden kann. Auf diese Weise wird der Anpressdruck, mit dem die innere Verschlussplatte von innen der Rohrwand anliegt wirksamer über die Kontaktfläche zwischen Verschlussplatte und Rohr verteilt, und der mittlere Bereich der Öffnung kann freigehalten werden, um in diesem mittleren Bereich die Spannmittel anzuordnen, die zur Festlegung der äußeren Verschlussplatte dienen.

In einer Ausgestaltung besteht die äußere Verschlussplatte aus einem transluzenten, insbesondere transparenten, Werkstoff. Dies ermöglicht eine optische Kontrolle, z, B. ob Schmutz oder Wasser in die Kavität eingedrungen ist, wenn nicht vorgesehen ist, die Kavität mit einer Vergussmasse auszufüllen. Wenn jedoch im Rahmen des Sanierungsverfahrens die Kavität mit einer Vergussmasse ausgefüllt wird, kann eine transluzente, insbesondere transparente äußere Verschlussplatte eine Kontrolle bei der Handhabung der Vergussmasse ermöglichen, beispielsweise zur Vermeidung unerwünschter Lufteinschlüsse, oder zur Fortschrittskontrolle, wie weit die Kavität mit der Vergussmasse bereits gefüllt ist.

Um das Einbringen der Vergussmasse in die Kavität zu ermöglichen, weist die äußere Verschlussplatte in einer Ausgestaltung eine dazu geeignete Injektionsöffnung auf. Der Durchmesser der Injektionsöffnung ist an die Viskosität der Vergussmasse angepasst, so dass beispielsweise ein Injektionsrohr an die Injektionsöffnung angesetzt werden kann und die Vergussmasse mit ausreichender Geschwindigkeit durch das Injektionsrohr und die Injektionsöffnung in die Kavität gedrückt werden kann. Eine zu schnelle Befüllung der Kavität mit der Vergussmasse kann nachteilig sein, vielmehr kann die Füllgeschwindigkeit durch den Durchmesser der Injektionsöffnung bewusst limitiert sein, um eine ausreichende Verteilung der Vergussmasse in der Kavität sicherzustellen und Lufteinschlüsse während des Einfüllvorgangs möglichst zu vermeiden.

Die Abdichtung der beiden Verschlussplatte kann, wenn der Verschluss der Öffnung mittels einer Vergussmasse vorgesehen ist, an die Viskosität der Vergussmasse angepasst sein. Beispielsweise kann die äußere Verschlussplatte mit einer solchen Dichtheit dem Rohr außen anliegen, dass Luft aus der Kavität entweichen kann, wenn die Vergussmasse in die Kavität eingebracht wird. Wenn die Luft aus der Kavität verdrängt und die Kavität vollständig mit der Vergussmasse gefüllt ist, ist die Dichtheit ausreichend, um einen Austritt der Vergussmasse zwischen Rohr und äußerer Verschlussplatte zu verhindern. Alternativ dazu kann die Verschlussplatte mit einer eigens dazu vorgesehenen Entlüftungsöffnung versehen sein, welche an die Kavität anschließt und so klein bemessen ist, dass sie zwar einerseits eine problemlose Entlüftung ermöglicht, insbesondere aufgrund einer vergleichsweise langsamen Befüllung der Kavität mit der langsam fließenden Vergussmasse, dass sie jedoch andererseits entweder den Austritt der Vergussmasse aufgrund ihres geringen Durchmessers verhindert oder zumindest schnell und unkompliziert abgedichtet werden kann, beispielsweise mithilfe eines Stücks Klebeband, das von außen über die Entlüftungsöffnung geklebt wird.

In diesem Zusammenhang kann vorgesehen sein, dass die äu-ßere Verschlussplatte zunächst ohne Entlüftungsöffnung bereitgestellt wird und die Entlüftungsöffnung erst in die äußere Verschlussplatte eingebracht wird, wenn diese bereits am Rohr montiert und festgelegt ist. Auf diese Weise kann die Entlüftungsöffnung zielgerichtet am höchstgelegenen Punkt der Kavität angebracht werden, so dass beim Einfüllen der Vergussmasse in die Kavität die Vergussmasse innerhalb der Kavität aufsteigt und bis zur vollständigen Befüllung der Kavität stets die gewünschte Entlüftung gewährleistet ist.

Ein Ausführungsbeispiel des erfindungsgemäßen Bausatzes und die Durchführung eines Verfahrens zur Rohrsanierung werden anhand der rein schematischen Darstellungen nachfolgend näher erläutert. Dabei zeigt
- Fig. 1: einen Blick von außen auf ein Rohr, das eine Öffnung eines Seitenanschlusses aufweist, zu einem ersten Zeitpunkt der Rohrsanierung,
- Fig. 2: einen Blick von außen aus einer anderen Blickrichtung auf die Öffnung zu einem zweiten, späteren Zeitpunkt der Rohrsanierung, und
- Fig. 3: einen schematischen Querschnitt durch die Öffnung während der Rohrsanierung.

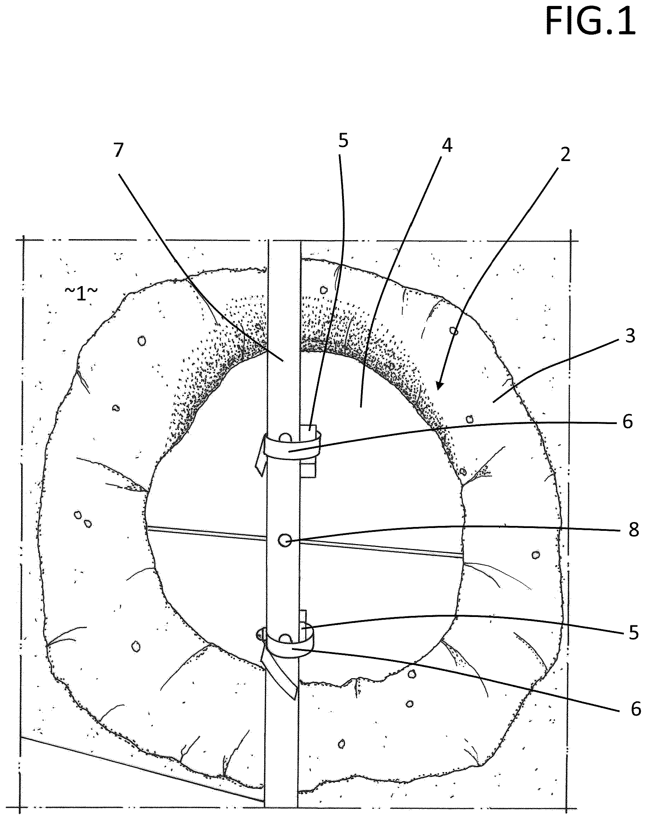

In Fig. 1 ist ausschnittsweise ein Rohr 1 dargestellt, das als Betonrohr ausgestaltet ist und eine Öffnung 2 aufweist, die zum Anschluss einer seitlich abzweigenden Rohrleitung dient. Die Öffnung 2 ist von einem unregelmäßig geformten Rand 3 begrenzt, wobei der Rand 3 von der Außenseite des Rohrs 1 nach innen hin schräg verläuft, so dass sich der Durchmesser der Öffnung 2 entlang des Randes 3 von außen nach innen zunächst verringert. Bei dem dargestellten Ausführungsbeispiel weist die Öffnung 2 etwa in der Mitte der Wandstärke ihren minimalen Durchmesser auf, aufgrund von Abplatzungen kann die Öffnung 2 in der Praxis jedoch auf unterschiedlichste Weise unregelmäßig sein, beispielsweise kann ihr Durchmesser an der Innenseite des Rohrs 1 größer sein als an der Außenseite des Rohrs 1.

Im Rahmen einer Rohrsanierung wird die Öffnung 2 abgedichtet, wobei bei dem dargestellten Ausführungsbeispiel vorgesehen ist, die Öffnung 2 mittels einer Vergussmasse vollständig auszufüllen und auf diese Weise zu verschließen.

Eine innere Verschlussplatte 4, die als ein Blech aus Federstahl ausgestaltet ist, ist zunächst im verformten Zustand, nämlich stark gekrümmt oder sogar aufgerollt, durch die Öffnung 2 in das Innere des Rohrs 1 eingeführt worden. Aufgrund der Federelastizität der inneren Verschlussplatte 4 hat diese anschließend innerhalb des Rohrs 1 ihre ursprüngliche, im Wesentlichen ebene oder nur noch schwach gekrümmte Form selbsttätig wieder angenommen, nachdem die äußeren Kräfte, welche die innere Verschlussplatte 4 in ihrem verformten Zustand gehalten haben, entfallen sind. Die Abmessungen der inneren Verschlussplatte 4 sind so groß, dass die innere Verschlussplatte 4 die Öffnung 2 im Inneren des Rohrs 1 vollständig abdeckt und rings um die Öffnung 2 der Rohrwand von innen anliegt.

An die Außenseite der inneren Verschlussplatte 4 sind zwei Laschen 5 angeschweißt, und durch die Laschen 5 verläuft jeweils ein Zugelement 6, das als verstellbare Rohrschelle ausgestaltet ist. Eine erste, innere Traverse 7 in Form eines Flacheisens verläuft durch die beiden Zugelemente 6 und liegt momentan noch außen auf dem Rohr 1 auf. Im weiteren Verlauf der Rohrsanierung wird die innere Traverse 7 gekürzt, so dass ihre beiden Enden sich innerhalb der Kavität befinden, die durch die Öffnung 2 und den schräg verlaufenden Rand 3 in der Wand des Rohrs 1 geschaffen ist. Die innere Traverse 7 verläuft daher, wenn sie passend eingekürzt und endgültig montiert ist, innerhalb dieser Kavität, weshalb sie als "innere" Traverse 7 bezeichnet ist. Die beiden verstellbaren Rohrschellen werden dann in der Art verstellt, dass der Durchmesser der beiden Rohrstellen verringert wird, so dass die beiden Rohrschellen in ihrer Funktion als Zugelemente 6 die innere Verschlussplatte 4 an die innere Traverse 7 heranziehen, nämlich in der Art, dass die innere Verschlussplatte 4 der Innenseite der Rohrwand eng anliegt. Die innere Traverse 7 weist eine Gewindebohrung 8 auf, auf die später noch näher eingegangen wird.

Bei dem dargestellten Ausführungsbeispiel ist die innere Verschlussplatte 4 nicht mit einer Dichtung versehen, beispielsweise einer Dichtung, die zwischen der inneren Verschlussplatte 4 und der inneren Oberfläche der Rohrwand verlaufen würde. Vielmehr wird, wenn die innere Traverse 7 endgültig montiert und die Zugelemente 6 passend eingestellt sind, als nächster Verfahrensschritt der Rohrsanierung eine Dichtung montiert. Bei dem dargestellten Ausführungsbeispiel ist die Verwendung eines Butylbandes vorgesehen, welches von außen in die Innenecke gepresst wird, die sich entlang dem Rand 3 dort ergibt, wo der Rand 3 der Öffnung 2 an die innere Verschlussplatte 4 stößt.

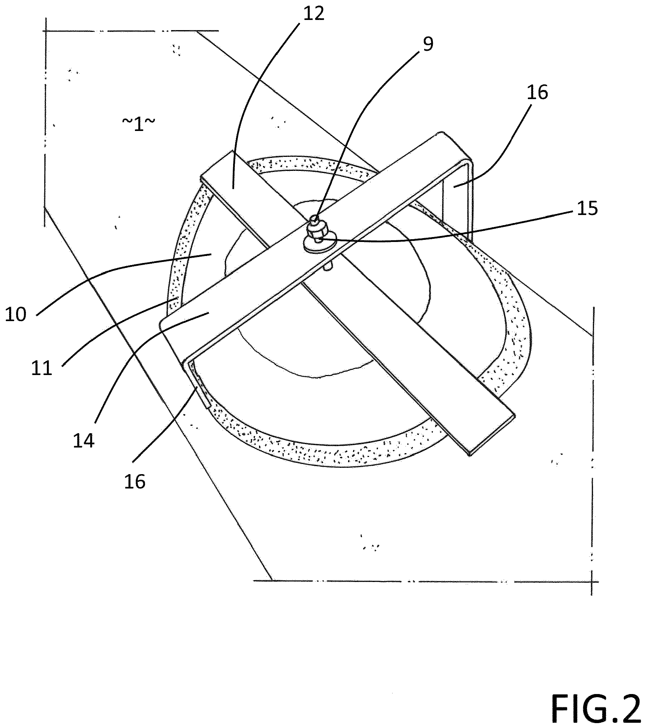

Fig. 2 zeigt das Rohr 1 gegen Ende der Rohrsanierung: zunächst ist eine Gewindestange 9 in die Gewindebohrung 8 der inneren Traverse 7 eingeschraubt worden. Anschließend ist eine äußere Verschlussplatte 10, die aus einem transparenten Kunststoff besteht, entlang ihren Umfang auf der Unterseite mit einem Dichtungsring 11 versehen ist und mittig eine Durchgangsbohrung aufweist, mit der Durchgangsbohrung auf die Gewindestange 9 aufgefädelt worden.

Eine zweite, äußere Traverse 12 in Form eines Flacheisens, ebenfalls mit einer Durchgangsbohrung versehen, ist ebenfalls auf die Gewindestange 9 aufgefädelt worden und so ausgerichtet worden, dass die äußere Traverse 12 in Längsrichtung des Rohrs 1 verläuft. Mittels einer Schnellspannmutter wird die äußere Traverse 12 gegen die äußere Verschlussplatte 10 gepresst. Die Schnellspannmutter kann zunächst entlang der Gewindestange 9 verschoben werden und wird erst zum Schluss, wenn sie der äußeren Traverse 12 bereits anliegt, in Drehung versetzt, um den gewünschten Anpressdruck zu erzeugen.

Anschließend wird ein Anpressbogen 14 auf die Gewindestange 9 aufgefädelt, wobei der Anpressbogen 14 bei dem dargestellten Ausführungsbeispiel aus dem gleichen Flacheisen-Material besteht wie die äußere Traverse 12, jedoch zweifach abgekantet, um den gewünschten U-förmigen Verlauf des Anpressbogens 14 zu schaffen. Der Anpressbogen 14 ist quer zur Längsachse des Rohrs 1 ausgerichtet und auf der Gewindestange 9 ebenfalls mit einer Schnellspannmutter 15 festgesetzt. Er weist zwei Anpressarme 16 auf, deren Enden die äußere Verschlussplatte 10 an die Außenseite des Rohrs 1 pressen.

Durch eine in Fig. 2 nicht sichtbare Injektionsöffnung kann eine fließfähige, selbstklebende Vergussmasse zum Beispiel in Form eines Vergussmörtels in die Kavität eingebracht werden, die erstens aus der Öffnung 2 besteht und zweitens, je nach Dicke des Dichtungsrings 11, auch aus dem Hohlraum, der sich zwischen der äußeren Verschlussplatte 10 und der Außenseite des Rohrs 1 ergibt und der durch den Dichtungsring 11 zirkumferent begrenzt ist.

Bei dem dargestellten Ausführungsbeispiel befindet sich die Öffnung 2 im oberen Umfangsabschnitt des Rohrs 1. Eine Entlüftung der Kavität, die beim Einfüllen der Vergussmasse erforderlich ist und vorteilhaft an der am höchsten gelegenen Stelle der Kavität erfolgt, kann beispielsweise an der Gewindestange 9 entlang durch die Durchgangsöffnung der äußeren Verschlussplatte 10 erfolgen. Wenn abweichend von dem dargestellten Ausführungsbeispiel die Öffnung 2 seitlich in dem Rohr 1 angeordnet ist, kann eigens eine Entlüftungsöffnung in die äußere Verschlussplatte 10 eingebracht werden, nämlich am geodätisch höchsten Punkt der Kavität.

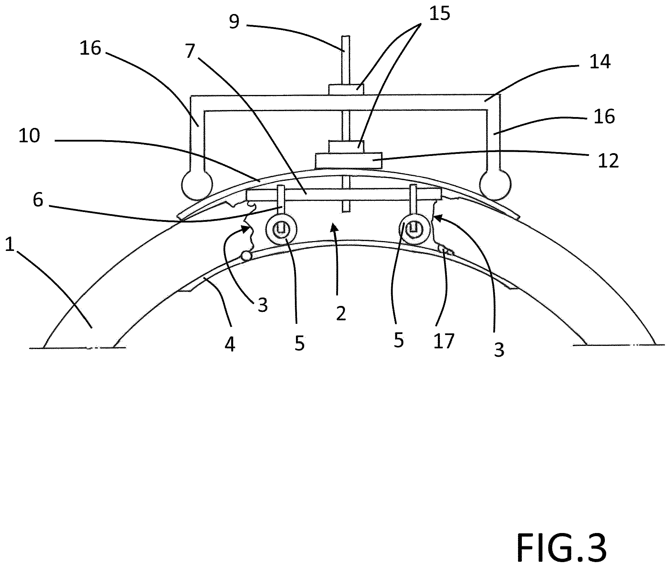

Fig. 3 zeigt den Aufbau aus den einzelnen Elementen des Bausatzes zur Rohrsanierung: die Öffnung 2 ist auf der Innenseite des Rohrs 1 mittels der inneren Verschlussplatte 4 abgedeckt, und das erwähnte Butylband verläuft als Dichtung 17 dort, wo der Rand 3 der Öffnung 2 an die innere Verschlussplatte 4 grenzt. Die an die innere Verschlussplatte 4 geschweißten Laschen 5 sind rein schematisch ringförmig dargestellt, und die Zugelemente 6 in Form der verstellbaren Rohrschellen verlaufen einerseits durch die Laschen 5 und andererseits um die innere Traverse 7, um die innere Verschlussplatte 4 von innen gegen die Wand des Rohrs 1 zu ziehen.

Die Gewindestange 9 ist einerseits höhenbeweglich in der inneren Traverse 7 festgelegt und bildet einen Bestandteil von Spannmitteln. Weitere Bestandteile der Spannmittel sind die äu-ßere Traverse 12, der Anpressbogen 14 mit seinen beiden Anpressarmen 16, sowie die beiden Schnellspannmuttern 15, so dass mithilfe der Spannmittel die äußere Verschlussplatte 10 von außen an die Wand des Rohrs 1 gepresst werden kann.

### Bezugszeichen:

- 1: Rohr
- 2: Öffnung
- 3: Rand
- 4: Innere Verschlussplatte
- 5: Lasche
- 6: Zugelement
- 7: Innere Traverse
- 8: Gewindebohrung
- 9: Gewindestange
- 10: Äußere Verschlussplatte
- 11: Dichtungsring
- 12: Äußere Traverse
- 14: Anpressbogen
- 15: Schnellspannmutter
- 16: Anpressarm
- 17: Dichtung

## Patentansprüche

1. Bausatz zum Sanieren von Rohren durch Verschließen einer durch einen Rand (3) begrenzten Öffnung (2) in der Wand des Rohrs (1),
der Bausatz enthaltend
• eine innere Verschlussplatte (4),
∘ die größer ist als die Öffnung (2)
∘ und die in der Art verformbar ist,
▪ dass sie zur Montage durch die Öffnung (2) hindurchführbar ist
▪ und anschließend, in ihrer Gebrauchsstellung, die Öffnung (2) verdeckend, im Inneren des Rohrs (1) der Rohrwand anlegbar ist,
• eine Dichtung (17), die dazu bestimmt ist, in ihrer Gebrauchsstellung die innere Verschlussplatte (4) gegen das Rohr (1) abzudichten,
• ein Zugelement (6),
∘ welches die Übertragung von Zugkräften ermöglichend an die innere Verschlussplatte (4) anschließt,
∘ und an einer solchen Stelle an die innere Verschlussplatte (4) anschließt, dass, wenn sich die innere Verschlussplatte (4) in ihrer Gebrauchsstellung befindet, das Zugelement (6) dazu bestimmt ist, sich von der inneren Verschlussplatte (4) in die Öffnung (2) zu erstrecken,
• eine innere Traverse (7)
∘ welche so kurz oder kürzbar ist, dass sie in ihrer Gebrauchsstellung mit ihren beiden Enden an den Rand (3) der Öffnung (2) anlegbar ist,
∘ und welche an das Zugelement (6) in der Art anschließbar ist, dass die innere Traverse (7) gegen abhebende Kräfte gesichert an der inneren Verschlussplatte (4) gehalten ist.

2. Bausatz nach Anspruch 1,
**dadurch gekennzeichnet,**
**dass** die innere Verschlussplatte (4) aus einem Blech besteht, insbesondere aus einem Federstahlblech.

3. Bausatz nach Anspruch 1,
**dadurch gekennzeichnet,**
**dass** die innere Verschlussplatte (4) aus einem verrottbaren Material besteht.

4. Bausatz nach einem der vorhergehenden Ansprüche, **dadurch gekennzeichnet,**
**dass** das Zugelement (6) als Rohrschelle mit verstellbarem Durchmesser ausgestaltet ist.

5. Bausatz nach einem der vorhergehenden Ansprüche, **dadurch gekennzeichnet,**
**dass** der Bausatz zwei Zugelemente (6) enthält, die im Abstand voneinander an die innere Verschlussplatte (4) in der Art anschließen, dass die innere Traverse (7) an zwei voneinander beabstandeten Stellen zugfest mit der inneren Verschlussplatte (4) verbindbar ist.

6. Bausatz nach einem der vorhergehenden Ansprüche, **dadurch gekennzeichnet,**
**dass** der Bausatz weiterhin eine äußere Verschlussplatte (10) enthält,
• die größer ist als die Öffnung (2),
• und die in ihrer Gebrauchsstellung, die Öffnung (2) verdeckend, außen an die Wand des Rohrs (1) anlegbar ist.

7. Bausatz nach Anspruch 6,
**dadurch gekennzeichnet,**
**dass** die äußere Verschlussplatte (10) aus einem transluzenten, insbesondere transparenten, Werkstoff besteht.

8. Bausatz nach Anspruch 6 oder 7,
**dadurch gekennzeichnet,**
**dass** die äußere Verschlussplatte (10) eine das Einfüllen einer die Öffnung (2) verschließenden Vergussmasse ermöglichende Injektionsöffnung aufweist.

9. Bausatz nach Anspruch 8
**dadurch gekennzeichnet,**
**dass** die äußere Verschlussplatte (10) eine Entlüftungsöffnung aufweist.

10. Bausatz nach einem der Ansprüche 6 bis 9,
**dadurch gekennzeichnet,**
**dass** die äußere Verschlussplatte (10) eine Durchgangsöffnung aufweist,
und **dass** der Bausatz weiterhin enthält:
• Spannmittel,
∘ die sich an der inneren Traverse (7) abstützen
∘ und sich in ihrer Gebrauchsstellung aus der Öffnung (2) nach außen und durch die Durchgangsöffnung der äußeren Verschlussplatte (10) hindurch erstrecken,
∘ und die mit einem verstellbaren Anschlag versehen sind,
▪ der den Verstellweg der äußeren Verschlussplatte (10) nach außen begrenzt
▪ und dessen Abstand zu der inneren Traverse (7) einstellbar ist,
• und einen Anpressbogen (14),
∘ der die Öffnung (2) übergreifend lang bemessen ist
∘ und in seiner Gebrauchsstellung zwei zu der äußeren Verschlussplatte (10) verlaufende Anpressarme (16) aufweist,
∘ und dessen Verstellweg an den Spannmitteln nach außen mittels eines zweiten verstellbaren Anschlags ebenfalls begrenzbar ist.

11. Bausatz nach einem der vorhergehenden Ansprüche,
**dadurch gekennzeichnet,**
**dass** der Bausatz eine zweite, äußere Traverse (12) enthält, deren Länge größer bemessen ist als der Durchmesser, den die Öffnung (2) in Längsrichtung des Rohrs (1) aufweist.

12. Bausatz nach einem der Ansprüche 10 oder 11,
**dadurch gekennzeichnet,**
**dass** der Anpressbogen (14) U-förmig oder V-förmig ausgestaltet ist.

13. Verfahren zur Sanierung eines Rohrs (1) mit einer mineralischen, insbesondere aus Beton bestehenden Rohrwand, wobei das Rohr (1) eine die Rohrwand durchsetzende Öffnung (2) aufweist, mit folgenden Verfahrensschritten:
a) die Öffnung (2) wird durch eine innere Verschlussplatte (4) abgedeckt, die an die Innenseite der Rohrwand angelegt wird,
b) die innere Verschlussplatte (4, 10) wird gegen das Rohr (1) abgedichtet.

14. Verfahren nach Anspruch 13,
**dadurch gekennzeichnet,**
**dass** die Öffnung (2) durch zwei Verschlussplatten (4, 10) abgedeckt wird, wobei die innere Verschlussplatte (4) an die Innenseite der Rohrwand angelegt wird und eine äußere Verschlussplatte (10) außen an die Rohrwand angelegt wird,
und **dass** die beiden Verschlussplatten (4, 10) gegen das Rohr (1) abgedichtet werden.

15. Verfahren nach Anspruch 13 oder 14,
**dadurch gekennzeichnet,**
**dass** die durch die Öffnung (2) in der Wand des Rohrs (1) geschaffene Kavität mit einem Vergussmaterial ausgefüllt wird.

16. Verfahren nach einem der Ansprüche 13 bis 15,
**dadurch gekennzeichnet,**
**dass** ein Bausatz nach einem der Ansprüche 9 bis 15 verwendet wird und die folgenden Verfahrensschritte durchgeführt werden:
• die innere Verschlussplatte (4) wird in einem verformten Zustand durch die Öffnung (2) hindurch von außen in das Innere des Rohrs (1) geführt
• anschließend wird die innere Verschlussplatte (4) in der Art verformt und in ihre Gebrauchsstellung gebracht, dass sie die Öffnung (2) verdeckt und im Inneren des Rohrs (1) der Rohrwand anliegt,
• die Dichtung (17) wird so an der inneren Verschlussplatte (4) angebracht, dass diese gegen das Rohr (1) abgedichtet ist,
• an das Zugelement (6), welches die Übertragung von Zugkräften ermöglichend außen an die innere Verschlussplatte (4) angeschlossen ist und in die Öffnung (2) weist, wird die innere Traverse (7) in der Art angeschlossen, dass sie gegen abhebende Kräfte gesichert an der inneren Verschlussplatte (4) gehalten ist,
• die innere Traverse (7) wird erforderlichenfalls gekürzt,
• die innere Traverse (7) wird mit ihren beiden Enden innerhalb der Öffnung (2) an den Rand (3) der Öffnung (2) angelegt,
• die äußere Verschlussplatte (10) wird die Öffnung (2) verdeckend außen an die Rohrwand angelegt,
• die innere Verschlussplatte (4) und die äußere Verschlussplatte (10) werden jeweils gegen die Rohrwand gespannt.

17. Verfahren nach Anspruch 16,
**dadurch gekennzeichnet,**
**dass** der Anpressbogen (14) mittels des zweiten verstellbaren Anschlags ebenfalls gegen die Rohrwand gespannt wird, derart, dass seine beiden Anpressarme (16) die äußere Verschlussplatte (10) außen an die Rohrwand pressen.

18. Verfahren nach einem der Ansprüche 13 bis 17,
**dadurch gekennzeichnet,**
**dass** die innere Verschlussplatte (4) nach Abschluss der Sanierungsarbeiten in dem Rohr (1) verbleibt.

19. Verfahren nach einem der Ansprüche 13 bis 18,
**dadurch gekennzeichnet,**
**dass** die innere Verschlussplatte (4) durch ihr innewohnende Rückstellkräfte gegen die Innenseite des Rohres (1) gedrückt wird.

20. Verfahren nach einem der Ansprüche 13 bis 19,
**dadurch gekennzeichnet,**
**dass** die beiden Verschlussplatten (4,10) durch Spannmittel zueinander gezogen werden.
